# EUROPEAN PATENT APPLICATION

(11) **EP 4 841 781 A1**
(43) Date of publication of application: **18.11.2026**
(21) Application number: 26164237.5
(22) Date of filing: 12.03.2026
(51) Int. Cl.: H01M 50/333, A62C 35/13, A62C 37/38, H01M 10/48, H01M 50/35, H01M 50/207, H01M 50/342

(54) **BATTERY PACK**

(30) Priority: 13.05.2025 KR 20250061861
(71) Applicant: SAMSUNG SDI CO., LTD., Yongin-si, Gyeonggi-do 17084 (KR)
(72) Inventor: JEONG, Wooseong, Yongin-si, Gyeonggi-do 17084 (KR); KANG, Gwangho, Yongin-si, Gyeonggi-do 17084 (KR); MOON, Taewon, Yongin-si, Gyeonggi-do 17084 (KR)
(74) Representative: Gulde & Partner

(57) **Abstract**

A battery pack (1) including a plurality of battery cells (100) each having a vent hole (134), an outer case (300) accommodating the plurality of battery cells (100), a fire-extinguishing unit (400) communicating with an interior of the outer case (300) and configured to supply a fire-extinguishing material (EF) to the interior of the outer case (300), and a vent unit (500) having a hollow interior, the vent unit (500) being connected to the vent hole (134) of each of the plurality of battery cells (100), the vent unit (500) being configured to discharge vent gas discharged from the plurality of battery cells (100) to an outside of the outer case (300).

## Description

### BACKGROUND

### 1. Field

The disclosure relates to a battery pack.

### 2. Description of the Related Art

**In** general, with the rapid development of the electrical, electronic, communications, and computer industries, the demand for high-performance and high-safety secondary batteries has rapidly increased recently. In particular, with the trend toward lighter, thinner, smaller, and more portable electrical and electronic products, secondary batteries, which are key components, are also required to be lighter and smaller.

**In** particular, as environmental pollution problems, such as air pollution and noise due to the mass distribution of automobiles, and the need for new forms of energy sources due to the depletion of oil have arisen, the need for the development of electric vehicles that may solve these problems has increased, and the development of batteries with high output and high energy density is required as power sources for the electric vehicles.

**In** response to such demands, one of the high-performance, next-generation, and cutting-edge new batteries, which has recently received the most attention, is a secondary battery. Lithium, used as an anode, is most in the spotlight as an electrode material for batteries with high energy density because lithium has very low density and standard reduction potential.

The above-described information disclosed in the background technology of the disclosure is only intended to improve understanding of the background of the disclosure and therefore may include information that does not constitute prior art.

### SUMMARY

Embodiments include a battery pack, including a plurality of battery cells each having a vent hole, an outer case accommodating the plurality of battery cells, a fire-extinguishing unit communicating with an interior of the outer case and configured to supply a fire-extinguishing material to the interior of the outer case, and a vent unit having a hollow interior, the vent unit being connected to the vent hole of each of the plurality of battery cells, the vent unit being configured to discharge vent gas discharged from the plurality of battery cells to an outside of the outer case. Hence, in case of malfunction, vent gas is exhausted via the vent unit without hindering the fire-extinguishing unit supplying fire-extinguishing material to the interior of the outer case, such that adverse effects of the malfunction can be at least reduced better.

According to an embodiment, the fire-extinguishing unit may include a fire-extinguishing material container accommodating or for accommodating the fire-extinguishing material. The fire-extinguishing unit may include a fire-extinguishing valve selectively allowing the fire-extinguishing material to be supplied from the fire-extinguishing material container to the interior of the outer case. An advantage of this embodiment may be that fire can be extinguished when required.

According to an embodiment, the fire-extinguishing material container may be connected to one surface of the outer case, the one surface being adjacent to the vent unit. An advantage of this embodiment may be that the fire-extinguishing material can be directly supplied to a section of the surface that needs to be cooled or where fire can be extinguished efficiently.

According to an embodiment, the vent unit may be between the fire-extinguishing unit and the plurality of battery cells. An advantage of this embodiment may be that the fire-extinguishing material can efficiently cool the vent unit.

According to an embodiment, the battery pack may further include a sensor unit inside the outer case, the sensor unit being configured to measure a temperature of the plurality of battery cells. An advantage of this embodiment may be that temperature can be monitored precisely.

According to an embodiment, the battery pack may further include a controller configured to control driving of the fire-extinguishing unit based on temperature information about the plurality of battery cells received from the sensor unit. An advantage of this embodiment may be that operation of the fire-extinguishing unit can easily be limited to when it is required to operate,

According to an embodiment, the controller may be further configured to open the fire-extinguishing valve if the temperature information from the sensor unit is higher than a predetermined temperature. An advantage of this embodiment may be that the fire-extinguishing unit is operated when required.

According to an embodiment, the controller may be further configured to open the fire-extinguishing valve if the temperature information, which may be representative of a raise in temperature per time unit, is higher than a predetermined value. The rise may be in Kelvin per predetermined number of seconds or Kelvin per predetermined number of minutes. An advantage of this embodiment may be that that the fire-extinguishing unit is operated when it is foreseeable that it is required.

According to an embodiment, a cross-section of the fire-extinguishing material container may have a shape becoming narrower toward the outer case. An advantage of this embodiment may be that the fire-extinguishing material can be released in a directed manner.

According to an embodiment, the plurality of battery cells may be accommodated in a first direction. The vent unit may include a plurality of first vent pipes respectively connected to vent holes of the plurality of battery cells. The vent unit may include another vent pipe or a second vent pipe connected to the plurality of first vent pipes. The other or second vent pipe may extend in the first direction The vent unit may include a first vent valve inside each of the plurality of first vent pipes The first vent valve may be elastically deformable based on an internal pressure of the plurality of battery cells to selectively allow vent gas inside the plurality of battery cells to flow into an interior of the second vent pipe. The first vent valve may be a check valve. An advantage of this embodiment may be that vent gas can be released in a controlled manner.

According to an embodiment, the battery pack may include an inner case accommodating the plurality of battery cells, the outer case accommodating the inner case, The vent unit may have one end portion penetrating the inner case, and another end portion penetrating the outer case and configured to discharge vent gas discharged from the plurality of battery cells to the outside of the outer case. An advantage of this embodiment may be that vent gas can be discharged in a controlled manner while being prevented from escaping the outer case in an uncontrolled manner.

According to an embodiment, the sensor unit is arranged between the outer case and the inner case, the sensor unit being configured to measure a temperature of the plurality of battery cells. An advantage of this embodiment may be that

An embodiments, which may be advantageous independent of or in combination with at least some of the above embodiments, may include a battery pack, including a plurality of battery cells each having a vent hole, an inner case accommodating the plurality of battery cells, an outer case accommodating the inner case, a fire-extinguishing unit communicating with an interior of the outer case and supplying a fire-extinguishing material to the interior of the outer case, and a vent unit having one end portion penetrating the inner case, the vent unit being connected to the vent hole of each of the plurality of battery cells, and having another end portion penetrating the outer case and discharging vent gas discharged from the plurality of battery cells to an outside of the outer case. Hence, in case of malfunction, vent gas is exhausted via the vent unit without hindering the fire-extinguishing unit supplying fire-extinguishing material to the interior of the outer case, such that adverse effects of the malfunction can be at least reduced better.

### BRIEF DESCRIPTION OF THE DRAWINGS

Features will become apparent to those of ordinary skill in the art by describing in detail exemplary embodiments with reference to the attached drawings, in which:
FIG. 1 is a perspective view of a battery pack according to an embodiment;
FIG. 2 is a perspective view of a battery cell according to an embodiment;
FIG. 3 is a cross-sectional view of the battery cell taken along a line II-II' of FIG. 2;
FIG. 4 is a cross-sectional view of the battery pack taken along a line I-I' of FIG. 1;
FIG. 5 is an enlarged view of a region A of FIG. 4;
FIG. 6 is a diagram for describing a usage state of a first vent valve illustrated in FIG. 5;
FIG. 7 is an enlarged view of a region B of FIG. 4;
FIG. 8 is a diagram for describing a usage state of a second vent valve illustrated in FIG. 7; and
FIG. 9 is a block diagram for describing a usage state of a controller according to an embodiment.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The disclosure may undergo various modifications and have various embodiments, and particular embodiments are illustrated in the drawings and described in detail in the detailed description. Effects and features of the disclosure and methods for achieving the same will become clear with reference to the embodiments described in detail below together with the drawings. However, the disclosure may be implemented in various forms.

**In** the following embodiments, the terms first, second, etc. are not used in a limiting sense but are used for the purpose of distinguishing one component from another.

**In** the following embodiments, singular expressions include plural expressions unless the context clearly indicates otherwise.

**In** the following embodiments, it should be understood that terms such as "include" or "have" are intended to specify the presence of features or components described in the specification, but do not preclude in advance the possibility that one or more other features or components may be added.

**In** the following embodiments, when it is said that a part such as a unit, region, or component is positioned above or on another part, this includes not only the case where the part is directly on the other part, but also the case where another unit, region, component, etc. is interposed therebetween.

**In** the following embodiments, terms such as connect or couple do not necessarily imply a direct and/or fixed connection or coupling of two members, unless the context clearly indicates otherwise, and do not exclude the presence of another member between the two members.

Unless there is an explicit description or contradiction of an order of operations constituting a method according to the disclosure, the operations may be performed in any suitable order. The disclosure is not necessarily limited to the order in which the above operations are described.

For example, in case that a particular embodiment is otherwise feasible, a particular process sequence may be performed in a different order than the one described. For example, two processes described sequentially may be performed substantially simultaneously, or may proceed in the reverse order from that described.

**In** the drawings, sizes of components may be exaggerated or reduced for convenience of explanation. For example, the size and thickness of each component shown in the drawing are arbitrarily shown for convenience of explanation, and thus the following embodiments are not necessarily just what is shown.

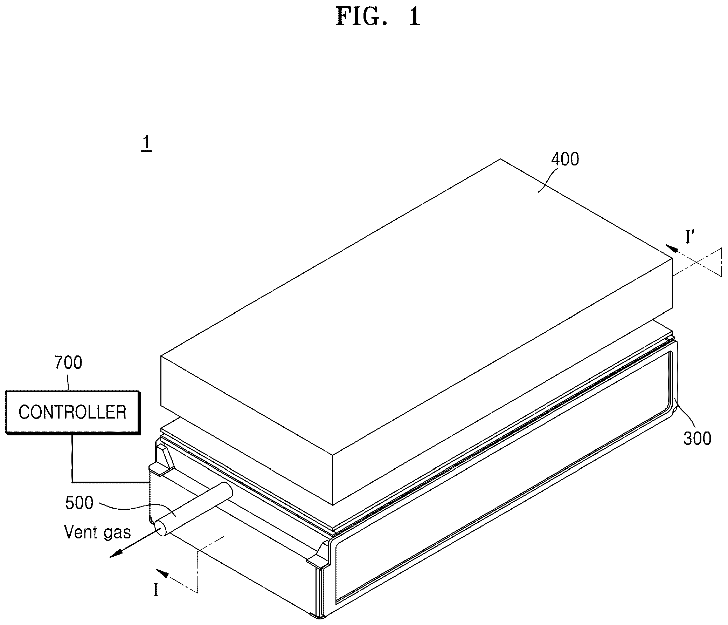

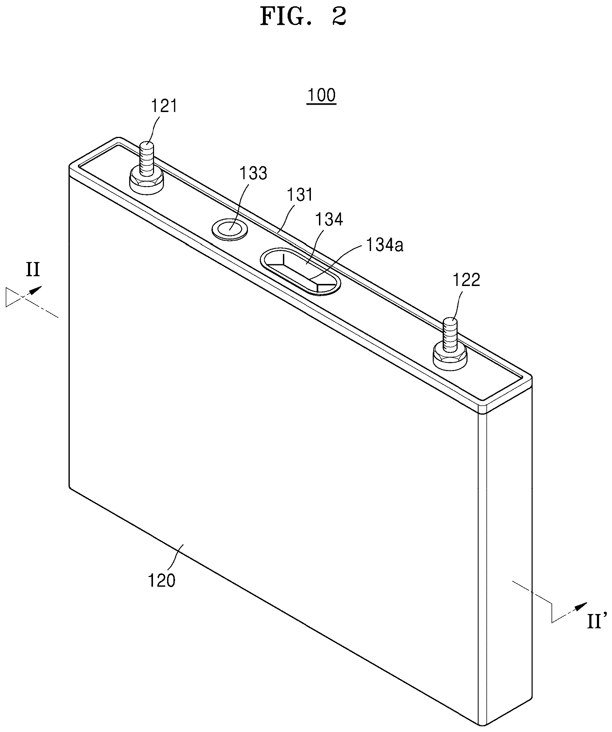

FIG. 1 is a perspective view of a battery pack according to an embodiment, and FIG. 2 is a perspective view of a battery cell according to an embodiment.

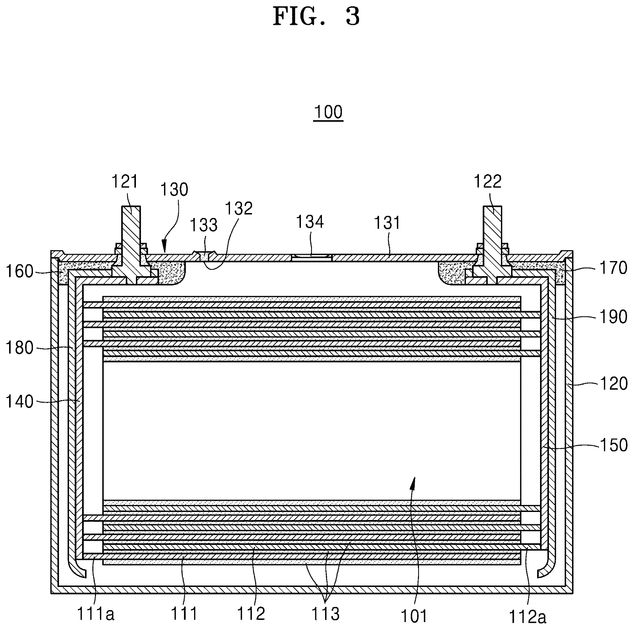

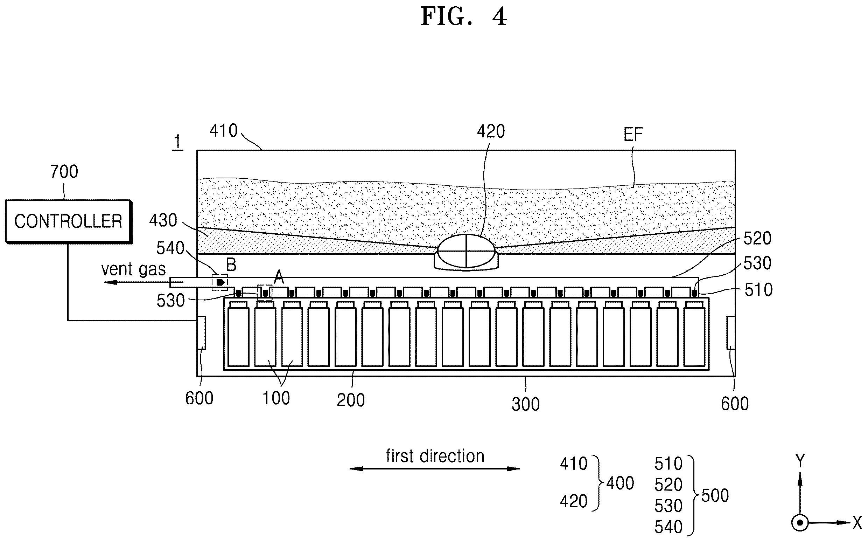

FIG. 3 is a cross-sectional view of the battery cell taken along a line II-II' of FIG. 2, and FIG. 4 is a cross-sectional view of the battery pack taken along a line I-I' of FIG. 1.

Referring to FIGS. 1 to 4, a battery pack 1 according to an embodiment may include a battery cell 100, an inner case 200, an outer case 300, a fire-extinguishing unit 400, a vent unit 500, a sensor unit 600, and a controller 700.

The battery cell 100 according to an embodiment may include an angular battery. However, the battery cell 100 may include a cylindrical battery or a pouch-shaped battery, and for convenience of explanation, the battery cell 100 including an angular battery is described below.

Referring to FIGS. 2 and 3, the battery cell 100 according to an embodiment may include at least one of the electrode assembly 101 wound between a positive electrode 111 and a negative electrode 112 with a separator 113 interposed therebetween as an insulator, a cell case 120 in which the electrode assembly 101 is built (e.g., is accommodated), and a cap assembly 130 coupled to an opening of the cell case 120.

The battery cell 100 according to an embodiment is described as having an angular shape (e.g., a prismatic battery cell) as an example. However, the disclosure may be applied to various types of batteries, such as a cylindrical or pouch-shaped battery.

The positive electrode 111 and the negative electrode 112 may each include a coated part, which is a region where an active material is coated on a current collector including a thin metal foil, and a non-coated part, which is a region where the active material is not coated.

The positive electrode 111 and the negative electrode 112 are wound after the separator 113, which is an insulator, is interposed therebetween. However, the above-described electrode assembly 101 may be formed in a structure in which the positive electrode 111 and the negative electrode 112, which include a plurality of sheets, are alternately stacked with the separator 113 interposed therebetween.

The cell case 120 may form the overall exterior of the battery cell 100 and may include a conductive metal, such as aluminum, an aluminum alloy, or nickel-plated steel. In some embodiments, the cell case 120 may provide a space in which the electrode assembly 101 is accommodated.

The cap assembly 130 may include a cap plate 131 covering the opening of the cell case 120, and the cell case 120 and the cap plate 131 may include conductive materials. Here, terminals of the positive electrode 111 and the negative electrode 112, which are electrically connected to the positive electrode 111 or the negative electrode 112, may be installed to protrude outwardly by penetrating the cap plate 131.

**In** some embodiments, outer surfaces of upper pillars of the terminals of the positive electrode 111 and the negative electrode 112, which protrude outwardly from the cap plate 131, may be threaded and fixed to the cap plate 131 with a nut.

However, the positive and negative terminals 121 and 122 may be formed in a rivet structure to be rivet-coupled, or may be welded and coupled to the cap plate 131.

**In** some embodiments, the cap plate 131 may include a thin plate and may be coupled to the opening of the cell case 120, and an electrolyte injection port 132 into which a sealing plug 133 may be installed may be formed in the cap plate 131, and a vent hole 134 in which a notch 134a is formed may be installed in the cap plate 131.

The vent hole 134 may be positioned on one side of the cell case 120, and if an internal pressure of the battery cell 100 reaches a preset (e.g., predetermined) pressure, the vent hole 134 may be opened so that an internal vent gas of the battery cell 100 may be released to the outside through the vent hole 134.

**In** some embodiments, the vent hole 134 may be positioned on one side of the cell case 120, which faces the fire-extinguishing unit 400 and/or the vent unit 500 to be described below, and may connect the cell case 120 and the vent unit 500 to each other. Accordingly, an internal vent gas of the cell case 120 may be discharged to the vent unit 500 through the vent hole 134.

For example, if the internal pressure of the battery cell 100 increases due to overcharge, over-discharge, short circuit, etc., the vent hole 134 may reduce a phenomenon in which the battery cell 100 explodes by discharging vent gas positioned inside the battery cell 100.

The vent hole 134 may be connected to the vent unit 500. For example, a first vent pipe 510 of the vent unit 500, which will be described below, may be welded and connected to one side of a cell frame where the vent hole 134 is positioned, and accordingly, the vent hole 134 and the first vent pipe 510 may be connected to each other, so that vent gas discharged from the vent hole 134 may flow into the interior of the first vent pipe 510.

The positive and negative terminals 121 and 122, respectively, may be electrically connected to current collectors including a first current collector 140 and a second current collector 150 (hereinafter referred to as a 'positive current collector' and a 'negative current collector'), which are welded and connected to a positive electrode non-coated part 111a or a negative electrode non-coated part 112a.

For example, the positive and negative terminals 121 and 122 may be coupled to the positive and negative current collectors 140 and 150 by welding, respectively. However, the disclosure is not limited thereto, and the positive and negative terminals 121 and 122 and the positive and negative current collectors 140 and 150 may also be formed by being coupled as an integral body.

In some embodiments, an insulating member may be installed between the electrode assembly 101 and the cap plate 131. Here, the insulating member may include a first insulating member 160 and a second insulating member 170, and each of the first insulating member 160 and the second insulating member 170 may be installed between the electrode assembly 101 and the cap plate 131.

In some embodiments, according to an embodiment, one end of a separating member that may be installed facing one side surface of the electrode assembly 101 may be installed between the insulating member and the positive and negative terminals 121 and 122.

Here, the separating member may include first and second separating members 180 and 190.

Accordingly, one end of each of the first and second separating members 180 and 190 that may be installed facing one side surface of the electrode assembly 101 may be installed between the first and second insulating members 160 and 170 and the positive and negative terminals 121 and 122, respectively.

As a result, the positive and negative terminals 121 and 122, which are welded and coupled to the positive and negative current collectors 140 and 150, may be coupled to the first and second insulating members 160 and 170 and one end of each of the first and second separating members 180 and 190, respectively.

Referring to FIG. 4, the inner case 200 according to an embodiment is a frame that accommodates a plurality of battery cells 100, which may be positioned inside the outer case 300.

The inner case 200 may include a housing that accommodates the plurality of battery cells 100 therein.

However, the inner case 200 may be disposed between the plurality of battery cells 100 and the vent unit 500, or may positionally fix the plurality of battery cells 100 in an internal space of the outer case 300 while being in surface contact with one surface of each of the battery cell 100.

The inner case 200 may be a case of a battery module, for example, the inner case 200 may be a case of a battery module including the plurality of battery cells 100 and accommodated in the outer case 300 of the battery pack 1.

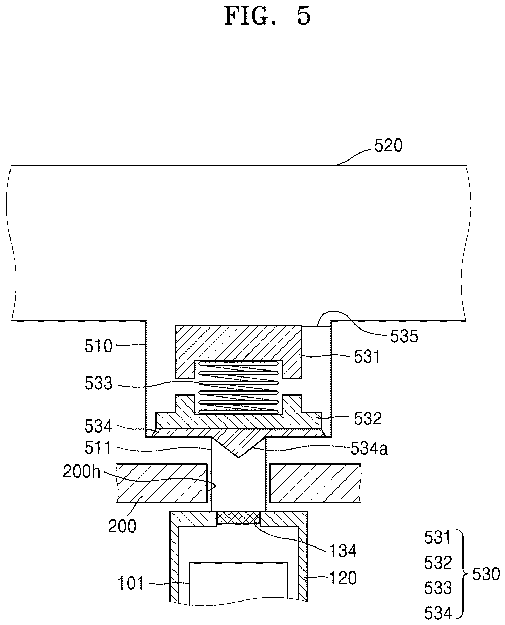

FIG. 5 is an enlarged view of a region A of FIG. 4.

Referring to FIG. 5, a coupling hole portion 200h into which a portion of the vent unit 500, particularly a portion of the first vent pipe 510, is inserted may be formed on one side of the inner case 200.

For example, the inner case 200 may include the coupling hole portion 200h positioned in an area overlapping (e.g., an area above) the vent hole 134.

A plurality of coupling hole portions 200h may be formed in the inner case 200, and each of the plurality of coupling hole portions 200h may be formed at a position corresponding to the vent hole 134 of each of the plurality of battery cells 100.

Referring to FIG. 5, the vent unit 500 may be penetrated or inserted into the coupling hole portion 200h. For example, a shaft part 511 of the first vent pipe 510 may be penetrated or inserted into the coupling hole portion 200h.

**In** some embodiments, the shaft part 511 having an outer diameter that is less than an outer diameter of the first vent pipe 510 in a region spaced apart from the coupling hole portion 200h and/or the vent hole 134 may be formed at an end portion of the first vent pipe 510, the end portion being coupled to the coupling hole portion 200h and/or the vent hole 134.

One end portion of the first vent pipe 510, particularly the shaft part 511 of the first vent pipe 510, may be inserted into the coupling hole portion 200h to be connected to the battery cell 100 positioned inside the inner case 200.

For example, an end portion of the first vent pipe 510 may extend through the coupling hole portion 200h to the interior of the inner case 200.

**In** an embodiment, the shaft part 511 may extend through the coupling hole portion 200h to the interior of the inner case 200 and may be connected to one side of the cell case 120 where the vent hole 134 is positioned.

Accordingly, the first vent pipe 510 may penetrate the inner case 200 through the coupling hole portion 200h, so that a second vent pipe 520 positioned outside the inner case 200 and the vent hole 134 positioned inside the inner case 200 may communicate with each other.

An inner diameter of the coupling hole portion 200h may be equal to or relatively larger than the outer diameter of the shaft part 511 of the first vent pipe 510.

**In** an embodiment, an inner surface of the coupling hole portion 200h may be in surface contact with an outer surface of the shaft part 511. **In** some embodiments, the outer surface of the shaft part 511 may be welded and coupled to an outer surface of the inner case 200 where the coupling hole portion 200h is positioned, so that the inner surface of the coupling hole portion 200h may be positionally fixed to the outer surface of the shaft part 511.

The inner diameter of the coupling hole portion 200h may be relatively smaller than an outer diameter of one side of the first vent pipe 510, the one side being spaced apart from the shaft part 511.

For example, the inner diameter of the coupling hole portion 200h may be relatively smaller than the outer diameter of one side of the first vent pipe 510, the one side being connected to the second vent pipe 520.

The inner diameter of the coupling hole portion 200h may be relatively larger than an inner diameter of the vent hole 134. For example, the inner diameter of the coupling hole portion 200h may be relatively larger than the maximum inner diameter of the vent hole 134.

Accordingly, the first vent pipe 510 welded and coupled to one surface of a cell case while covering the entire area of the vent hole 134 may extend from the outside to the inside of the inner case 200 by penetrating the coupling hole portion 200h.

Referring to FIGS. 1 and 4, the outer case 300 according to an embodiment accommodates the battery cell 100, the inner case 200, the vent unit 500, the sensor unit 600, etc., therein, and may be formed in a shape of a housing or frame that forms a sealed area therein, and the outer case 300 may serve as a case of the battery pack 1.

A fire-extinguishing unit 400 may be connected to one side of the outer case 300. For example, a fire-extinguishing material container 410 that accommodates a fire-extinguishing material EF may be connected to one side of the outer case 300.

In case that (e.g., if) an explosion of the battery cell 100 occurs or the temperature of the battery cell 100 rises rapidly, the fire-extinguishing material EF accommodated in the fire-extinguishing material container 410 may be supplied to the interior of the outer case 300, thereby rapidly reducing the temperature of the battery cell 100 positioned inside the outer case 300 or rapidly suppressing a flame generated in the battery cell 100.

A hole portion may be formed on one side of the outer case 300, and the fire-extinguishing unit 400 may be inserted into the hole portion formed in the outer case 300. For example, one side of the fire-extinguishing material container 410 may be inserted into the hole portion formed in the outer case 300.

The outer case 300 and the fire-extinguishing unit 400 may be integrally formed. For example, the hole portion of the outer case 300 and the fire-extinguishing material container 410 may be firmly connected to each other by welding-coupling or the like.

Referring to FIG. 4, the fire-extinguishing unit 400 according to an embodiment communicates with (e.g., in fluid communication with) the interior of the outer case 300 to supply the fire-extinguishing material **EF** to the interior of the outer case 300, and may include the fire-extinguishing material container 410, a fire-extinguishing valve 420, and a support part 430.

The fire-extinguishing material container 410 accommodates the fire-extinguishing material EF and may be connected to one surface of the outer case 300.

For example, the fire-extinguishing material container 410 may be connected to one surface of the outer case 300, the one surface being adjacent to the vent unit 500, or the fire-extinguishing material container 410 may be connected to one side wall of the outer case 300, the one side wall facing the vent hole 134.

The fire-extinguishing material container 410 may be formed in a shape of a chamber disposed outside the outer case 300, for example, the fire-extinguishing material container 410 may be disposed on an upper side of the outer case 300.

Referring to FIG. 4, a cross-section (e.g., in the X-axis direction) of the fire-extinguishing material container 410 may be formed in a shape that becomes narrower toward the outer case 300 (e.g., in the Z-axis direction)." For example, the cross-section of the fire-extinguishing material container 410 may be formed in a shape that linearly becomes narrower toward the outer case 300. For example, referring to FIG. 4, a height of the fire-extinguishing material container 410 (e.g., as measured from the top of the support part 430 to the top of the fire-extinguishing material container 410 in the Z-axis direction) may gradually decrease as a distance along the X-axis direction increases from the center of the fire-extinguishing material container 410 toward the edges (e.g., periphery) of the fire-extinguishing material container 410 (e.g., so a surface of the fire-extinguishing material container 410 contacting and holding the fire extinguishing material (EF) is sloped from the edges toward the center of the fire-extinguishing material container 410). For example, referring to FIGS. 1 and 4, a height from the bottom of the support part 430 to the top of the fire-extinguishing material container 410 in the Z-axis direction may be constant.

The fire-extinguishing material container 410 may be connected to the outer case 300 through a passage. For example, the fire-extinguishing valve 420 opening and closing the passage may be positioned inside the passage, and the passage in which the fire-extinguishing valve 420 is positioned may be positioned on the side of a central part of the fire-extinguishing material container 410.

The cross-section of the fire-extinguishing material container 410 may be formed in a shape that becomes narrower toward the outer case 300 to converge to an inner diameter of the passage.

Accordingly, in case that the fire-extinguishing valve 420 is opened and the fire-extinguishing material EF accommodated in the fire-extinguishing material container 410 flows into the interior of the outer case 300 by gravity, the discharge efficiency of the fire-extinguishing material EF may be improved due to the shape of the narrowing cross-section of the fire-extinguishing material container 410.

Referring to FIG. 4, the fire-extinguishing valve 420 opens and closes the passage of the fire-extinguishing material container 410, and may perform opening and closing operations according to a control signal from the controller 700.

In case that the temperature of the battery cell 100 or the temperature of the inner case 200, which is obtained from the sensor unit 600, exceeds a preset (e.g., predetermined) temperature, the controller 700 may open the fire-extinguishing valve 420.

Accordingly, the fire-extinguishing material EF accommodated in the fire-extinguishing material container 410 may flow into the interior of the outer case 300 to reduce the temperature of the battery cell 100 or to quickly suppress fire occurring inside the outer case 300.

In an embodiment, in case that the temperature of the battery cell 100 or the temperature of the inner case 200 exceeds a preset temperature, and the above exceeding state continues for a preset time, the controller 700 may open the fire-extinguishing valve 420.

In an embodiment, in case that a temperature rise rate of the battery cell 100 or a temperature rise rate of the inner case 200, which is obtained from the sensor unit 600, exceeds a preset value, the controller 700 may open the fire-extinguishing valve 420.

In some embodiments, in case that the temperature rise rate of the battery cell 100 or the temperature rise rate of the inner case 200 exceeds a preset value, and the above exceeding state continues for a preset time, the controller 700 may open the fire-extinguishing valve 420.

As an embodiment, the "temperature rise rate" that may be represented by or derived from the temperature information, may be interpreted as a temperature increase per time unit, e.g. Kelvin per predetermined number of seconds or Kelvin per predetermined number of minutes.

Accordingly, the fire-extinguishing material EF accommodated in the fire-extinguishing material container 410 may flow into the interior of the outer case 300 to reduce the temperature of the battery cell 100 or to quickly suppress fire occurring inside the outer case 300.

The fire-extinguishing valve 420 may include various devices within the technical concept of opening the fire-extinguishing material container 410 in response to a control signal from the controller 700 so that the fire-extinguishing material EF is discharged into the interior of the outer case 300.

For example, the fire-extinguishing valve 420 may include a solenoid valve, a spring-return valve, a pump valve, a gate valve, a needle valve, a diaphragm valve, a ball valve, a plug valve, a butterfly valve, a globe valve, a slide valve, an electrically actuated valve, a hydraulic valve, or a pneumatic valve.

Referring to FIG. 4, the support part 430 according to an embodiment may fix the fire-extinguishing material container 410 to the outer case 300.

The support part 430 may be disposed between the fire-extinguishing material container 410 and the outer case 300 to be connected to each of the fire-extinguishing material container 410 and the outer case 300.

The support part 430 may include a member that fills the space between the fire-extinguishing material container 410 and the outer case 300, or may include a bracket or the like that connects the outer case 300 to the fire-extinguishing material container 410.

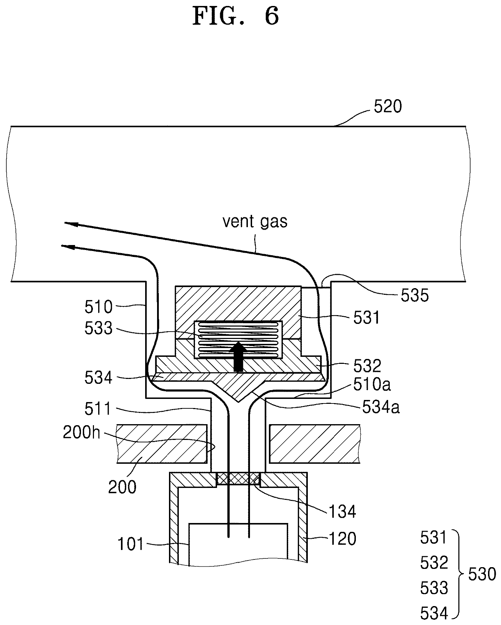

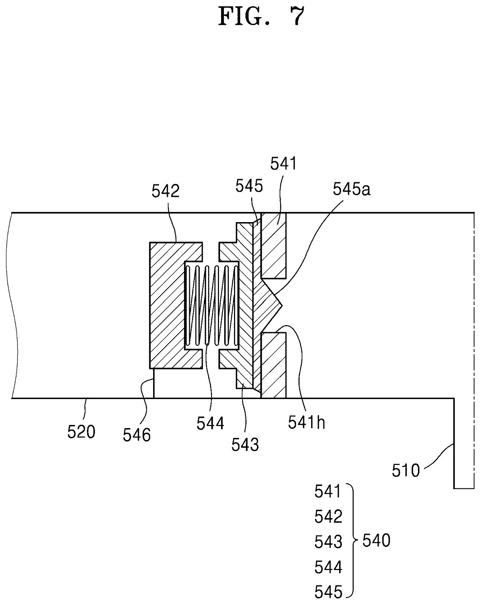

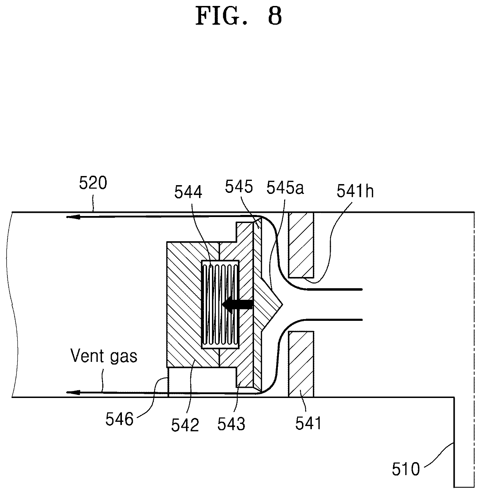

FIG. 6 is a diagram for describing a usage state of a first vent valve illustrated in FIG. 5, FIG. 7 is an enlarged view of a region B of FIG. 4, and FIG. 8 is a diagram for describing a usage state of a second vent valve illustrated in FIG. 7.

Referring to FIGS. 4 and 5 together with FIGS. 6 to 8, the vent unit 500 according to an embodiment discharges vent gas discharged from the battery cell 100 to the outside of the outer case 300, and may include the first vent pipe 510, the second vent pipe 520, a first vent valve 530, and a second vent valve 540.

The vent unit 500 may be connected to each vent hole 134 of the plurality of battery cells 100, may discharge the vent gas discharged from the battery cell 100 to the outside of the outer case 300, and may be formed in a hollow tube shape with a hollow interior.

The vent unit 500 may include a pipe disposed inside the outer case 300. For example, the vent unit 500 may be disposed between the outer case 300 and the inner case 200.

Referring again to FIGS. 4 and 5, the first vent pipe 510 is connected to each of the battery cell 100 and the second vent pipe 520, and may provide a flow path of vent gas from the battery cell 100 to the second vent pipe 520.

The second vent pipe 520 extends from the inside to the outside of the outer case 300, and may be formed in a shape of a hollow tube that provides a flow path of vent gas to discharge the vent gas received from the first vent pipe 510 to the outside of the outer case 300.

The second vent pipe 520 may be formed in a shape of a hollow tube extending in a direction in which the plurality of battery cells 100 are stacked, and a plurality of first vent pipes 510 may be connected to one of the second vent pipe 520.

The first vent pipe 510 may be formed in a shape of a hollow tube extending in a height direction of the battery cell 100, which is perpendicular to the stacking direction of the plurality of battery cells 100.

One end portion of the first vent pipe 510 may be connected to the second vent pipe 520, and another end portion of the first vent pipe 510 may be connected to the battery cell 100.

The plurality of first vent pipes 510 may be connected to each other on an outer peripheral surface of the second vent pipe 520 while being spaced apart from each other at equal intervals.

In some embodiments, the plurality of first vent pipes 510 may be disposed on one surface of the second vent pipe 520, the one surface facing the battery cell 100, to be spaced apart from each other at equal intervals.

An internal space of the first vent pipe 510 and an internal space of the second vent pipe 520 may communicate with each other.

An outer diameter of one end portion of the first vent pipe 510, which is connected to the battery cell 100, particularly the shaft part 511, may be relatively smaller than an outer diameter of another end portion of the first vent pipe 510, which is connected to the second vent pipe 520.

An inner diameter of one end portion of the first vent pipe 510, which is connected to the battery cell 100, particularly the shaft part 511, may be relatively smaller than an inner diameter of the other end portion of the first vent pipe 510 where the first vent valve 530 is positioned.

Referring to FIG. 6, a step 510a may be formed on an inner peripheral surface of the first vent pipe 510. For example, the step 510a may be formed on the inner peripheral surface of the first vent pipe 510 due to the difference between the inner diameter of one side of the first vent pipe 510 where the first vent valve 530 is positioned and the inner diameter of the shaft part 511.

The first vent valve 530 may selectively be in contact with the step 510a formed on the inner peripheral surface of the first vent pipe 510, and as the first vent valve 530 is in contact with the step 510a, the flow of vent gas from the shaft part 511 to the second vent pipe 520 may be restricted.

In some embodiments, as the first vent valve 530 is spaced apart from the step 510a, vent gas may be allowed to flow from the shaft part 511 to the second vent pipe 520.

One end portion of the first vent pipe 510 may be welded and coupled to the battery cell 100. For example, an end portion of the shaft part 511 may be welded to the battery cell 100 and positionally fixed to one side of the battery cell 100.

The first vent pipe 510 may be connected to one side of a cell case corresponding to an outer peripheral area of the vent hole 134, and accordingly, an internal space of the vent hole 134 and the internal space of the first vent pipe 510 may communicate with each other.

For example, the shaft part 511 may be connected to one side of the cell case corresponding to the outer peripheral area of the vent hole 134, and accordingly, the internal space of the vent hole 134 and an internal space of the shaft part 511 may communicate with each other.

The inner diameter of the shaft part 511 may be relatively larger than the inner diameter of the vent hole 134.

The shaft part 511 of the first vent pipe 510 may penetrate the coupling hole portion 200h of the inner case 200 to be connected to the battery cell 100 positioned inside the inner case 200.

The first vent valve 530 may be positioned in the internal space of the first vent pipe 510, and the internal space of the first vent pipe 510 may be spaced apart from the second vent valve 540.

The second vent pipe 520 may be connected to the plurality of first vent pipes 510 so that vent gas may be received from the first vent pipe 510 and discharged to an external area of the outer case 300.

The second vent pipe 520 may be formed in a shape of a hollow tube extending from the external area to the internal area of the outer case 300, for example, the second vent pipe 520 may be formed in a shape of a hollow tube penetrating the outer case 300.

An inner diameter of the second vent pipe 520 may be equal to or relatively larger than an inner diameter of the first vent pipe 510.

The second vent valve 540 may be disposed inside the second vent pipe 520, for example, the second vent valve 540 may be disposed in an internal area of the second vent pipe 520, which is adjacent to a wall of the outer case 300.

One of the second vent valve 540 may be disposed in one of the second vent pipe 520, and the second vent valve 540 may be disposed in an area spaced apart from the first vent valve 530 or the first vent pipe 510.

Referring to FIGS. 5 and 6, the first vent valve 530 according to an embodiment may be positioned inside the first vent pipe 510 and may be elastically deformed (e.g., may be elastically deformable and reformable) according to an internal pressure of the battery cell 100 to allow vent gas inside the battery cell 100 to flow into the interior of the second vent pipe 520.

The first vent valve 530 may include a first base part 531, a first moving part 532, a first pressurizing part 533, a first sealing part 534, and a first fixing member 535.

The first base part 531 may be positionally fixed to the inner peripheral surface of the first vent pipe 510 and may support an operation of the first vent valve 530. In some embodiments, the first fixing member 535 may connect the first base part 531 to the inner peripheral surface of the first vent pipe 510 between the first base part 531 and the inner peripheral surface of the first vent pipe 510, thereby allowing the first base part 531 to be fixed in position to an inner side of the first vent pipe 510.

The first base part 531 may be disposed on a longitudinal central axis of the first vent pipe 510, and an outer diameter of the first base part 531 may be relatively smaller than the inner diameter of the first vent pipe 510.

Accordingly, in case that the first vent valve 530 is opened, vent gas may flow toward the second vent pipe 520 through the space between the first base part 531 and the first vent pipe 510.

A concave groove portion may be formed on one surface of the first base part 531, which faces the battery cell 100 or the first moving part 532, to face toward the center of the first base part 531, and the first pressurizing part 533 may be placed in the groove portion.

The first moving part 532 may linearly move along a longitudinal direction of the first vent pipe 510 within the first vent pipe 510, and as the first moving part 532 moves, vent gas may be allowed to flow from the vent hole 134 into the interior of the second vent pipe 520.

The first moving part 532 may be connected to the first pressurizing part 533, for example, the first moving part 532 may be connected to the first base part 531 through the first pressurizing part 533.

A concave groove portion may be formed on one surface of the first moving part 532, which faces the first base part 531, to face toward the center of the first moving part 532, and the first pressurizing part 533 may be placed in the groove portion.

The first sealing part 534 may be connected to one surface of the first moving part 532. For example, the first sealing part 534 may be in surface contact with another surface of the first moving part 532, which is opposite to one surface of the first moving part 532, which faces the first base part 531.

The first pressurizing part 533 may be positioned between the first base part 531 and the first moving part 532, one end portion of the first pressurizing part 533 may be positionally fixed to the first base part 531, and another end portion of the first pressurizing part 533 may be positionally fixed to the first moving part 532.

The first pressurizing part 533 may include an elastic body, such as a spring. Accordingly, in case that pressure is applied to one surface of the first moving part 532 due to the pressure of vent gas, the first pressurizing part 533 may be elastically deformed as the first moving part 532 moves toward the first base part 531.

In this case, a distance between the first moving part 532 and the shaft part 511 may increase, and thus, vent gas may be discharged toward the second vent pipe 520 through the space between the first moving part 532 and the shaft part 511.

In some embodiments, in case that the pressure of the vent gas positioned inside the battery cell 100 decreases again and the pressure applied to one surface of the first moving part 532 decreases, the first pressurizing part 533 that was elastically deformed may be elastically restored, so that the first moving part 532 may be in close contact with the side of the shaft part 511, and accordingly, the vent gas remaining inside the first vent pipe 510 and/or the second vent pipe 520 may be prevented from flowing into the vent hole 134.

The first sealing part 534 prevents the vent gas from flowing back from the second vent pipe 520 toward the vent hole 134 through the shaft part 511, and may be attached to one surface of the first moving part 532.

The first sealing part 534 may be positioned between the first moving part 532 and the shaft part 511, and as the first moving part 532 moves, the first sealing part 534 may come into contact with the step 510a formed on the inner side of the first vent pipe 510.

An outer diameter of the first sealing part 534 may be relatively smaller than the inner diameter of the first vent pipe 510.

Accordingly, the first sealing part 534 may move together with the first moving part 532 inside the first vent pipe 510, and as the first sealing part 534 may come into close contact with the inner side of the first vent pipe 510 while being elastically deformed, the first sealing part 534 may effectively prevent backflow of vent gas.

A first protrusion portion 534a may be formed on one surface of the first sealing part 534, which faces the shaft part 511, and the first protrusion portion 534a of the first sealing part 534 may be inserted into the internal space of the shaft part 511.

The first protrusion portion 534a of the first sealing part 534 may be formed in a shape in which an outer diameter thereof decreases toward the shaft part 511.

For example, the outer diameter of the first protrusion portion 534a of the first sealing part 534 may be linearly decreased toward the shaft part 511.

An inner diameter of the first protrusion portion 534a may be equal to the inner diameter of the shaft part 511 or may be relatively smaller than the inner diameter of the shaft part 511.

A longitudinal central axis of the first protrusion portion 534a of the first sealing part 534 may be coaxial with a longitudinal central axis of the shaft part 511.

The longitudinal central axis of the first protrusion portion 534a of the first sealing part 534 may be coaxial with the longitudinal central axis of the first vent pipe 510.

Accordingly, in case that the internal pressure of the battery cell 100 is not sufficiently high, and the first moving part 532 is in close contact with the shaft part 511, the first sealing part 534 may be in close contact with the inner side of the first vent pipe 510, specifically, the step 510a, and at the same time, the first protrusion portion 534a may be in close contact with the internal area of the shaft part 511, so that the first sealing part 534 may effectively prevent the backflow or flow of vent gas.

In some embodiments, referring to FIG. 6, in case that the first vent valve 530 is opened and the vent gas flows toward the first vent valve 530, the outer diameter of the first protrusion portion 534a of the first sealing part 534 is formed in a shape that increases as being farther away from the shaft part 511, so that the first protrusion portion 534a having an inclined surface may guide a flow path of vent gas to the space between the first vent valve 530 and the first vent pipe 510.

Accordingly, there is an effect in which the vent gas may be smoothly discharged along an outer peripheral surface of the first protrusion portion 534a having an inclined surface through the space between the first vent valve 530 and the first vent pipe 510.

Referring to FIGS. 7 and 8, the second vent valve 540 according to an embodiment may be positioned inside the second vent pipe 520 and may be elastically deformed according to the internal pressure of the second vent pipe 520, thereby allowing vent gas inside the second vent pipe 520 to flow to the outside of the outer case 300.

The second vent valve 540 may include a fixed part 541, a second base part 542, a second moving part 543, a second pressurizing part 544, a second sealing part 545, and a second fixing member 546.

Referring to FIG. 7, the fixed part 541 may be positionally fixed to the inner peripheral surface of the second vent pipe 520 and may come into contact with the second moving part 543 and/or the second sealing part 545 depending on the movement of the second moving part 543.

A through-hole portion 541h may be formed in the fixed part 541, and vent gas inside the second vent pipe 520 may pass through the fixed part 541 through the through-hole portion 541h.

The through-hole portion 541h may be positioned on a longitudinal central axis of the second vent pipe 520.

For example, in case that the pressure of the vent gas positioned inside the second vent pipe 520 is lower than a preset pressure, the second pressurizing part 544 may apply force to the second moving part 543 and/or the second sealing part 545 in a direction away from the second base part 542, thereby allowing the second moving part 543 and/or the second sealing part 545 to come into close contact with the fixed part 541 to close the through-hole portion 541h.

Accordingly, the through-hole portion 541h may be closed, thereby limiting the discharge of vent gas to the outside of the outer case 300.

In some embodiments, in case that the pressure of the vent gas positioned inside the second vent pipe 520 is higher than a preset pressure, the vent gas may apply pressure to the second moving part 543 and/or the second sealing part 545 in a direction approaching the second base part 542, thereby allowing the second moving part 543 and/or the second sealing part 545 to be spaced apart from the fixed part 541 to open the through-hole portion 541h.

Accordingly, the through-hole portion 541h may be opened, thereby allowing the vent gas to be discharged to the outside of the outer case 300.

In some embodiments, in case that an event, such as overcharge, over-discharge, short circuit, or explosion, occurs in the battery cell 100 and thus the pressure of the vent gas of the battery cell 100 increases, the vent gas may pass through the first vent valve 530 and enter the interior of the second vent pipe 520, thereby increasing the internal pressure of the second vent pipe 520 and allowing the second moving part 543 to move, and accordingly, the through-hole portion 541h may be opened so that the vent gas may be discharged to the outside of the second vent pipe 520.

In some embodiments, the second vent valve 540 may be opened by the pressure of the vent gas that has entered the interior of the second vent pipe 520, so that the vent gas may pass through the through-hole portion 541h to be discharged to the outside of the outer case 300, thereby preventing the battery pack 1 from exploding.

The second base part 542 may be positionally fixed to the inner peripheral surface of the second vent pipe 520 and may support an operation of the second vent valve 540. In some embodiments, the second fixing member 546 may connect the second base part 542 to the inner peripheral surface of the second vent pipe 520 between the second base part 542 and the inner peripheral surface of the second vent pipe 520, thereby allowing the second base part 542 to be fixed in position on an inner side of the second vent pipe 520.

The second base part 542 may be disposed on the longitudinal central axis of the second vent pipe 520, and an outer diameter of the second base part 542 may be relatively smaller than the inner diameter of the second vent pipe 520.

Accordingly, in case that the second vent valve 540 is opened, the vent gas passing through the through-hole portion 541h of the fixed part 541 may flow to an end portion side of the second vent pipe 520 through the space between the second base part 542 and the second vent pipe 520 to be discharged to the outside of the outer case 300.

A concave groove portion may be formed on one surface of the second base part 542, which faces the fixed part 541, to face toward the center of the second base part 542, and the second pressurizing part 544 may be placed in the groove portion.

The second moving part 543 may linearly move along a longitudinal direction of the second vent pipe 520 inside the second vent pipe 520, and as the second moving part 543 moves, the through-hole portion 541h may be opened to allow the vent gas to pass through the fixed part 541 through the through-hole portion 541h.

The second moving part 543 may be connected to the second pressurizing part 544, for example, the second moving part 543 may be connected to the second base part 542 through the second pressurizing part 544.

A concave groove portion may be formed on one surface of the second moving part 543, which faces the second base part 542, to face toward the fixed part 541, and the second pressurizing part 544 may be placed in the groove portion.

The second sealing part 545 may be connected to one surface of the second moving part 543. For example, the second sealing part 545 may be in surface contact with one surface of the second moving part 543, which faces the fixed part 541.

The second pressurizing part 544 may be positioned between the second base part 542 and the second moving part 543, one end portion of the second pressurizing part 544 may be positionally fixed to the second base part 542, and another end portion of the second pressurizing part 544 may be positionally fixed to the second moving part 543.

The second pressurizing part 544 may include an elastic body, such as a spring. Accordingly, in case that pressure is applied to one surface of the second moving part 543 due to the pressure of vent gas, the second pressurizing part 544 may be elastically deformed as the second moving part 543 moves toward the second base part 542.

In this case, the distance between the second moving part 543 and the fixed part 541 may increase, and accordingly, the through-hole portion 541h of the fixed part 541 may be opened so that the vent gas passes through the fixed part 541 to be discharged to the outside of the outer case 300.

In some embodiments, in case that the pressure of the vent gas positioned inside the battery cell 100 decreases again, the first vent valve 530 is closed, and thus the pressure of the vent gas positioned in the second vent pipe 520 decreases, the second pressurizing part 544 that was elastically deformed may be elastically restored, so that the second moving part 543 may be in close contact with the side of the fixed part 541, and accordingly, the vent gas remaining inside the first vent pipe 510 and/or the second vent pipe 520 may be prevented from flowing into the vent hole 134.

The second sealing part 545 opens and closes the through-hole portion 541h to restrict vent gas from passing through the fixed part 541, and may be attached to one surface of the second moving part 543.

The second sealing part 545 may be positioned between the second moving part 543 and the fixed part 541, and as the second moving part 543 moves, the second sealing part 545 may be in contact with the fixed part 541 that is positionally fixed to the second vent pipe 520 to close the through-hole portion 541h.

An outer diameter of the second sealing part 545 may be relatively smaller than the inner diameter of the second vent pipe 520.

Accordingly, the second sealing part 545 may move together with the second moving part 543 inside the second vent pipe 520, and as the second sealing part 545 may be elastically deformed to come into close contact with the fixed part 541 over a large area, the second sealing part 545 may effectively prevent backflow of vent gas.

A second protrusion portion 545a may be formed on one surface of the second sealing part 545, which faces the fixed part 541, and the second protrusion portion 545a of the second sealing part 545 may be inserted into the through-hole portion 541h.

The second protrusion portion 545a of the second sealing part 545 may be formed in a shape in which an outer diameter thereof decreases toward the fixed part 541.

For example, an outer diameter of the second protrusion portion 545a of the second sealing part 545 may be linearly decreased toward the fixed part 541.

A first diameter of the second protrusion portion 545a may be equal to the inner diameter of the through-hole portion 541h or may be relatively smaller than the inner diameter of the through-hole portion 541h.

A longitudinal central axis of the second protrusion portion 545a of the second sealing part 545 may be coaxial with a longitudinal central axis of the through-hole portion 541h.

The longitudinal central axis of the second protrusion portion 545a of the second sealing part 545 may be coaxial with the longitudinal central axis of the second vent pipe 520.

Accordingly, in case that the internal pressure of the battery cell 100 is not sufficiently high, and the second moving part 543 is in close contact with the fixed part 541, the second sealing part 545 may be in close contact with the fixed part 541, and at the same time, the second protrusion portion 545a may be in close contact with an internal area of the through-hole portion 541h, so that the second sealing part 545 may effectively prevent the leakage of vent gas.

In some embodiments, referring to FIG. 8, in case that the second vent valve 540 is opened and the vent gas flows toward the second vent valve 540, the outer diameter of the second protrusion portion 545a of the second sealing part 545 may be formed in a shape that increases as being farther away from the fixed part 541, so that an outer surface of the second protrusion portion 545a having an inclined surface may guide a flow path of vent gas to the space between the second vent valve 540 and the second vent pipe 520.

Accordingly, there is an effect in which the vent gas may be smoothly discharged along an outer peripheral surface of the second protrusion portion 545a having an inclined surface through the space between the second vent valve 540 and the second vent pipe 520.

Referring again to FIG. 4, the sensor unit 600 according to an embodiment measures the temperature of the battery cell 100 or the temperature of the inner case 200, and may be positioned inside the outer case 300.

The sensor unit 600 may be attached to a side wall of the inner case 200, and the sensor unit 600 may be disposed, for example, between the outer case 300 and the inner case 200.

The sensor unit 600 may measure the temperature of the battery cell 100 or the temperature of the inner case 200 and transmit measured temperature information about the battery cell 100 or temperature information about the inner case 200 to the controller 700.

The sensor unit 600 may include various devices capable of measuring the temperature of the battery cell 100 or the temperature of the inner case 200. For example, the sensor unit 600 may include a negative temperature coefficient (NTC) thermistor, a positive temperature coefficient (PTC) thermistor, a type-K thermocouple, a type-T thermocouple, a PT1000 resistance temperature detector (PT1000 RTD), a micro-electro-mechanical systems (MEMS) temperature sensor, a non-contact infrared temperature sensor, or a surface mount temperature sensor.

In an embodiment, the sensor unit 600 may include a device, such as a digital temperature sensor, a wireless temperature sensor, a multi-channel temperature sensor, a thermally conductive temperature sensor, or a thermal imaging camera, that may be integrated into a battery management system (BMS).

The sensor unit 600 may include a high-speed response temperature sensor to respond quickly even in situations where rapid changes in temperature of the battery cell 100 may occur, or may be configured as an industrial temperature sensor that may operate stably even in extreme temperature environments.

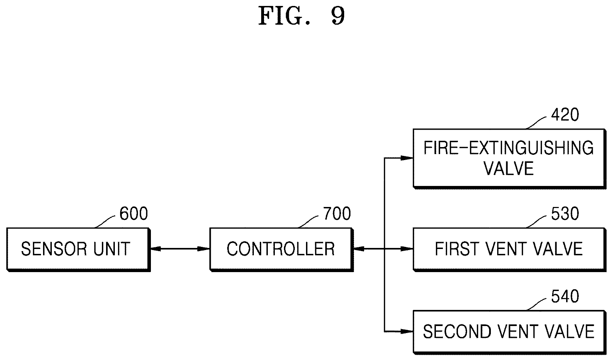

FIG. 9 is a block diagram for describing a usage state of a controller according to an embodiment.

Referring to FIGS. 1, 4, and 9, the controller 700 according to an embodiment may control driving of the fire-extinguishing unit 400 and/or the vent unit 500 by obtaining temperature information (e.g., receiving temperature information) about the battery cell 100 or temperature information about the inner case 200, which is obtained from (e.g., or sent by) the sensor unit 600.

For example, the controller 700 may control driving of at least one of the fire-extinguishing valve 420, the first vent valve 530, and the second vent valve 540 by using the temperature information.

In case that the temperature of the battery cell 100 or the temperature of the inner case 200, which is obtained from the sensor unit 600, (hereinafter referred to as 'measured temperature') exceeds a preset first temperature, the controller 700 may simultaneously open the first vent valve 530 and the second vent valve 540, thereby allowing vent gas generated inside the battery cell 100 to be quickly discharged to the outside of the outer case 300, and accordingly, preventing an explosion of the battery cell 100 in an early stage or quickly reducing the temperature/pressure of the battery cell 100.

For example, in case that the measured temperature exceeds the first temperature and the above exceeding state continues for a preset time, the controller 700 may simultaneously open the first vent valve 530 and the second vent valve 540.

When a rise rate of the measured temperature exceeds a preset value, the controller 700 may simultaneously open the first vent valve 530 and the second vent valve 540.

In this specification, the "measured temperature" is defined as the temperature of the battery cell 100 or the temperature of the inner case 200, which is measured by the sensor unit 600.

For example, in case that a rise rate of the measured temperature exceeds a preset value and the above exceeding state continues for a preset first time, the controller 700 may simultaneously open the first vent valve 530 and the second vent valve 540.

In an embodiment, in case that an increase in the measured temperature per time unit exceeds a preset value, the controller 700 may simultaneously open the first vent valve 530 and the second vent valve 540.

For example, in case that the increase in the measured temperature per time unit exceeds a preset value and the above exceeding state continues for a first time, the controller 700 may simultaneously open the first vent valve 530 and the second vent valve 540.

Accordingly, the vent gas generated inside the battery cell 100 may be allowed to be quickly discharged to the outside of the outer case 300, thereby preventing an explosion of the battery cell 100 in an early stage or quickly reducing the temperature/pressure of the battery cell 100.

In an embodiment, in case that the measured temperature exceeds a second temperature that is higher than the first temperature, the controller 700 may open the fire-extinguishing valve 420.

For example, in case that the measured temperature exceeds the second temperature and the above exceeding state continues for a second time that is longer than the first time, the controller 700 may open the fire-extinguishing valve 420.

In an embodiment, in case that a rise rate of the measured temperature exceeds a preset value, the controller 700 may open the fire-extinguishing valve 420.

For example, in case that the rise rate of the measured temperature exceeds a preset value and the above exceeding state continues for the second time, the controller 700 may open the fire-extinguishing valve 420.

In an embodiment, in case that an increase in the measured temperature per time unit exceeds a preset value, the controller 700 may open the fire-extinguishing valve 420.

For example, in case that the increase in the measured temperature per time unit exceeds a preset value and the above exceeding state continues for the second time, the controller 700 may open the fire-extinguishing valve 420.

Accordingly, the fire-extinguishing material EF accommodated in the fire-extinguishing material container 410 may flow into the interior of the outer case 300 to reduce the temperature of the battery cell 100 or to quickly suppress fire occurring inside the outer case 300.

The battery pack 1 according to embodiments includes the fire-extinguishing unit 400 supplying the fire-extinguishing material EF to the inside of a case of the battery pack 1 and the vent unit 500 discharging vent gas, thereby having an effect of quickly processing the battery cell 100 when an event occurs in the battery cell 100.

Each of the embodiments described above may be implemented independently, but the structure of each embodiment may be applied in combination to other embodiments.

A battery pack according to embodiments includes a fire-extinguishing unit that supplies a fire-extinguishing material to the inside of a case of the battery pack and a vent unit that discharges vent gas, thereby having an effect of being capable of quickly processing a battery cell when an event occurs in the battery cell.

However, effects obtainable through the disclosure are not limited to the effects described above, and other technical effects not mentioned will be clearly understood by those of ordinary skill in the art from the description of the disclosure described above.

Although the disclosure has been described with reference to the embodiments shown in the drawings, these are merely examples, and those of ordinary skill in the art will understand that various modifications are possible therefrom. Therefore, the true technical protection scope of the disclosure should be determined by the technical concept of the appended patent claims.

The specific implementations described in the embodiments are intended to be illustrative only and do not limit the scope of the embodiments in any way. In addition, if there is no specific mention such as "essential" or "importantly," it may not be a component absolutely necessary for the application of the disclosure.

The use of the term "above" and similar referential terms in the specification of embodiments (especially in the claims) may refer to both the singular and the plural. In addition, when a range is described in an embodiment, it is considered that the disclosure includes an individual value that falls within the range (unless otherwise stated), and it is the same as describing each individual value that constitutes the range in the detailed description.

Any use of examples or example terms (e.g., "etc.") in the disclosure is merely intended to illustrate the disclosure in more detail and is not intended to limit the scope of the disclosure by virtue of such examples or example terms, unless otherwise limited by the claims. Furthermore, those of ordinary skill in the art will appreciate that various modifications, combinations and variations may be made according to design conditions and factors within the scope of the appended claims.

Secondary batteries may experience a thermal runaway, in which the temperature rises rapidly under specific conditions, and in case that a thermal runaway occurs or an explosion occurs in one of multiple battery cells within a battery pack, there is a risk that heat will be transferred to adjacent battery cells, causing a chain reaction of explosions or fires.

Such a chain of explosions not only causes damage to the entire battery pack but also poses a major factor that a user may face serious safety issues.

Accordingly, the development of a system configured to control the temperature rise of a secondary battery and prevent the risk of explosion has emerged as a very important technological task, for example, research and development have been continued on various systems that may monitor the temperature of battery cells in real-time, detect a thermal runaway in an early stage, and quickly process cells in which overheat/explosion has occurred.

The disclosure provides a battery pack capable of quickly processing a battery cell in case that an event occurs in the battery cell by including a fire-extinguishing unit supplying a fire-extinguishing material to the interior of a case of the battery pack, and a vent unit discharging a vent gas.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery pack (1), comprising:
a plurality of battery cells (100) each having a vent hole (134);
an outer case (300) accommodating the plurality of battery cells (100);
a fire-extinguishing unit (400) communicating with an interior of the outer case (300) and configured to supply a fire-extinguishing material (EF) to the interior of the outer case (300); and
a vent unit (500) having a hollow interior, the vent unit (500) being connected to the vent hole (134) of each of the plurality of battery cells (100), the vent unit (500) being configured to discharge vent gas discharged from the plurality of battery cells (100) to an outside of the outer case (300).

2. The battery pack (1) as claimed in claim 1, wherein the fire-extinguishing unit (400) comprises:
a fire-extinguishing material container (410) for accommodating the fire-extinguishing material (EF); and
a fire-extinguishing valve (420) selectively allowing the fire-extinguishing material (EF) to be supplied from the fire-extinguishing material container (410) to the interior of the outer case (300).

3. The battery pack (1) as claimed in claim 2, wherein the fire-extinguishing material container (410) is connected to one surface of the outer case (300), the one surface being adjacent to the vent unit (500).

4. The battery pack (1) as claimed in any of claims 1 to 3, wherein the vent unit (500) is arranged between the fire-extinguishing unit (400) and the plurality of battery cells (100).

5. The battery pack (1) as claimed in any of claims 2 to 4, further comprising a sensor unit (600) arranged inside the outer case (300), the sensor unit (600) being configured to measure a temperature of the plurality of battery cells (100).

6. The battery pack (1) as claimed in claim 5, further comprising a controller (700) configured to control driving of the fire-extinguishing unit (400) based on temperature information about the plurality of battery cells (100) received from the sensor unit (600).

7. The battery pack (1) as claimed in claim 6, wherein the controller (700) is further configured to open the fire-extinguishing valve (420) if the temperature information from the sensor unit (600) is higher than a predetermined temperature.

8. The battery pack (1) as claimed in claim 6, wherein the controller (700) is further configured to open the fire-extinguishing valve (420) if the temperature information, which is representative of a raise in temperature per time unit, is higher than a predetermined value.

9. The battery pack (1) as claimed in any of claims 2 to 4, wherein a cross-section of the fire-extinguishing material container (410) has a shape becoming narrower toward the outer case (300).

10. The battery pack (1) as claimed in any of claims 1 to 4, wherein the plurality of battery cells (100) is accommodated in a first direction, and wherein the vent unit (500) comprises:
a plurality of first vent pipes (510) respectively connected to vent holes (134) of the plurality of battery cells (100);
a second vent pipe (520) connected to the plurality of first vent pipes (510), the second vent pipe (520) extending in the first direction; and
a first vent valve (530) arranged inside each of the plurality of first vent pipes (510), the first vent valve (530) being elastically deformable based on an internal pressure of the plurality of battery cells (100) to selectively allow vent gas inside the plurality of battery cells (100) to flow into an interior of the second vent pipe (520).

11. The battery pack (1) as claimed in any of claims 5 to 8, wherein a cross-section of the fire-extinguishing material container (410) has a shape becoming narrower toward the outer case (300).

12. The battery pack (1) as claimed in any of claims 5 to 8 and 11, wherein the plurality of battery cells (100) is accommodated in a first direction, and wherein the vent unit (500) comprises:
a plurality of first vent pipes (510) respectively connected to vent holes (134) of the plurality of battery cells (100);
a second vent pipe (520) connected to the plurality of first vent pipes (510), the second vent pipe (520) extending in the first direction; and
a first vent valve (530) arranged inside each of the plurality of first vent pipes (510), the first vent valve (530) being elastically deformable based on an internal pressure of the plurality of battery cells (100) to selectively allow vent gas inside the plurality of battery cells (100) to flow into an interior of the second vent pipe (520).

13. The battery pack (1) as claimed in any of claims 1 to 12, comprising:
an inner case (200) accommodating the plurality of battery cells (100), the outer case (300) accommodating the inner case (200);
wherein the vent unit (500) has one end portion penetrating the inner case (200) and another end portion penetrating the outer case (300) and discharging vent gas discharged from the plurality of battery cells (100) to the outside of the outer case (300).

14. The battery pack (1) as claimed in claim 13 when depending from any of claims 1 to 4, 9 or 10, wherein the sensor unit (600) between the outer case (300) and the inner case (200), the sensor unit (600) being configured to measure a temperature of the plurality of battery cells (100).
